# EUROPEAN PATENT APPLICATION

(11) **EP 1 311 102 A1**
(43) Date of publication of application: **14.05.2003**
(21) Application number: 01410149.7
(22) Date of filing: 08.11.2001
(51) Int. Cl.: H04M 3/493

(54) **Streaming audio under voice control**

(71) Applicant: Hewlett-Packard Company, Palo Alto, CA 94304 (US)
(72) Inventor: Rosset, Jean Michel, 38410 Saint Martin d'Héres (FR)
(74) Representative: Lloyd, Richard Graham

(57) **Abstract**

The present invention relates to a data processing system and method and, more particularly, to a computer aided telephony system and method which uses RTSP and associated protocols to support voice applications and audio processing by various, distributed, speech processing engines. Since RTSP is used to distribute the tasks to be performed by the speech processing engines, a distributed and scalable system can be realised. Furthermore, the integration of third party speech processing engines is greatly simplified due to the RTSP or HTTP interface to those engines.

## Description

### Field of the Invention

The present invention relates to a data processing system and method and, more particularly, to a computer aided telephony system and method.

### Background to the Invention

Computer aided telephony (CAT) is the automated provision of services via a telephone. Telephone banking and the like are examples of systems which use computer aided telephony. The CAT system runs a voice application which defines a customer's interaction with a business process that has been established on behalf of the party for whom the CAT system is employed. The voice application outputs various voice menus to which the user can reply using a combination of the spoken word or a telephone or computer keypad.

To perform speech processing functions such as Automatic Speech Recognition or Text-To-Speech conversion, the CAT system uses a number of dedicated data processing engines.

Various vendors of commercial products allow those products to be licensed and incorporated into such computer aided telephony systems in exchange for payment of appropriate royalties. Typically, the royalties may be reviewed from time to time. Any such review may cause the vendor of the computer aided telephony system to re-evaluate the use of a given third party's media processing engine. Alternatively, as speech processing and generation technologies develop, the suitability of a current technology may be questioned. Any such re-evaluation may result in a different processing engine being selected to support the computer aided telephony system.

The change of a data processing engine requires corresponding changes to be made to the software for supporting the above mentioned computer aided telephony systems. In particular the interface to the data processing engine needs to be modified. Clearly, these changes will involve the vendor of the computer aided telephony system in significant time and expense in ensuring the correct interoperability between a newly selected data processing engine and the existing software for controlling the computer aided telephony system.

Conventionally, CAT systems are implemented using a server that has a SONET telephony interconnection which distributes data processing tasks to hardware DSP that have been specifically designed to perform speech processing functions. The capacity of such a CAT system is limited by the performance and number of time slots of the bus. However, as a business grows, the computer aided telephony demands of that business may also grow. The CAT system may be expected to cope with significantly increased traffic. Accommodating such an increased demand often results in the need to increase the number of data processing engines that are used by the CAT system. Providing scalable solutions to CAT systems represents a significant hurdle in the design and development of such CAT systems and also represents a significant expense since a new TDM bus or an additional TDM bus may have to be employed.

It is an object of the present invention at least to mitigate some of the problems of the prior art.

### Summary of Invention

Accordingly, a first aspect of the present invention provides a data processing system comprising a server, operable under the control of a voice application, for handling incoming and outgoing telephony data and a plurality of remote network accessible data processing engines for processing the incoming data and producing the outgoing data; the system comprising means for streaming the input data, using a streaming communication protocol, to at least one data processing engines using a network identifier corresponding to an interface of the at least one data processing engine.

Advantageously, since the embodiments of the present invention use a streaming protocol to distribute data to be processed, together with network identifiers, the above mentioned problems of scalability and integration are reduced.

Embodiments of the present invention find particular application within computer aided telephony systems. Suitably, embodiments provide a data processing system, in which the plurality of remote network accessible data processing engines comprise at least one of an automatic speech processing engine for identifying a utterance represented by the incoming telephony data, a text-to-speech processing engine for outputting data representing an utterance derived from text data and an audio streaming engine for outputting a data file containing audio data.

Therefore the utterances spoken by a user of the system can be streamed to an appropriate speech processing engine using a relatively simple interface.

One of the problems addressed by embodiments of the present invention is the provision of a relatively simple interface to data processing engines. Therefore, embodiments provide a data processing system, in which the means for streaming the input data comprises means for issuing at least one of a set of commands of the streaming protocol to instigate the streaming. Preferably, the set of commands represents the conventional RTSP media player abstractions. Hence embodiments provide a data processing system, in which the set of commands includes at least one of play, record, stop, pause, resume, set-up and tear-down.

Computer aided telephony systems often need to use voice menus when directing a user through a process. The voice menu may be derived from a corresponding text file or from an audio file. Accordingly, embodiments provide a data processing system, further comprising means for outputting data, streamed from one of the network accessible data processing engines, to a telephony network.

It will be appreciated by those skilled in the art that within a global business, the language understood by customers of that business will vary greatly. Therefore, embodiments provide a data processing system, further comprising means for streaming a grammar to the at least one data processing engine to influence the processing of the streamed input data. Still further embodiments provide a data processing system, further comprising means for streaming a vocabulary to the at least one data processing engine to influence the processing results produced by processing the streamed input data. The grammar and vocabulary may be loaded on the fly or at initialisation of the data processing engine to which it is directed.

Preferred embodiments provide a data processing system, in which the streaming protocol comprises at least one of RTSP, UDP, RTP.

Still further, embodiments preferably provide a data processing system, further comprising means for providing an extension to the RTSP protocol to support the addition of a message body to at least one of RTSP command. Preferably, the message body comprises a header for identifying the data processing engine by which the message should be processed.

Preferably, the data processing engine is arranged to support the parameters, messages and methods defined in the Real-Time Streaming Protocol.

In another aspect the invention provides a method for use in a data processing system comprising a server, operable under the control of a voice application, for handling incoming and outgoing telephony data and a plurality of remote network accessible data processing engines for processing the incoming data and producing the outgoing data; the method comprising streaming the input data, using a streaming communication protocol, to at least one of the plurality of data processing engines using a network identifier corresponding to an interface of the at least one data processing engine.

### Brief Description of the Drawings

Embodiments of the present invention will now be described, by way of example only, with reference to the accompanying drawings in which:
figure 1 shows a first embodiment of the present invention; and
figure 2 shows a flow chart for controlling streamed data.

### Description of the preferred embodiments

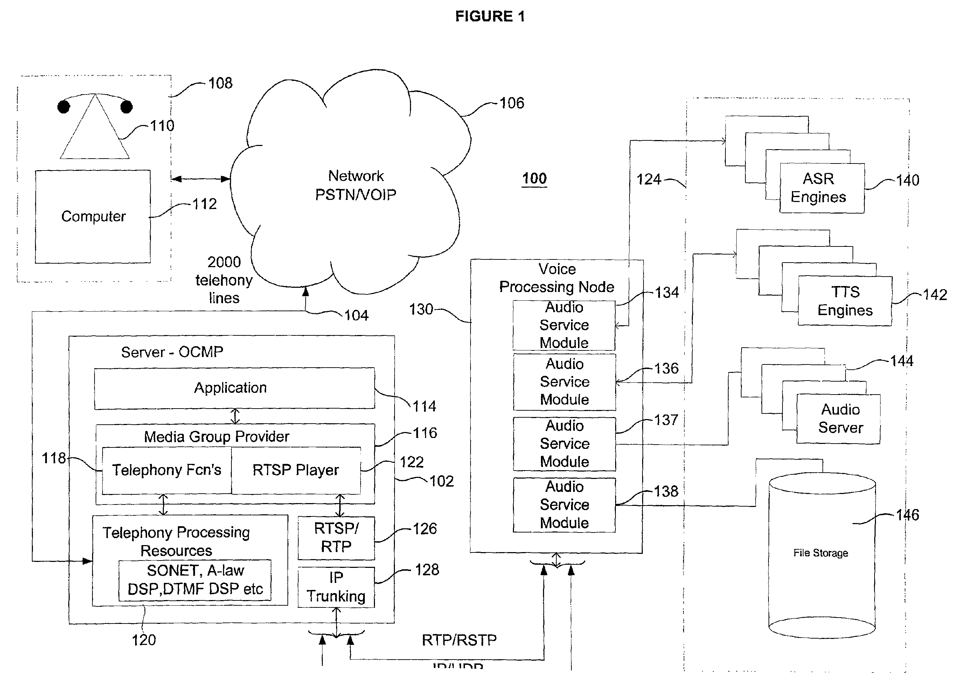

The system 100 shown in figure 1 comprises a computer aided telephony server 102 that has a telephony connection 104 to a network 106. The telephony connection 104 may comprise, for example, 2000 incoming and outgoing telephone lines. The network may be a conventional PSTN or a VOIP network. Also interfaced to the network 106 is a communication device 108. The communication device may comprise data communication equipment (DCE) or data terminating equipment (DTE) such as, for example, a telephone 110 or a computer 112.

The server 102 comprises a voice application 114. The voice application is a computer aided telephony application for providing voice services to an end user of the communication equipment 108. The voice application is arranged to perform various business functions in response to signals received from the communication device 108 under the actuation of the user. The voice application 114 output various voice menus from which the user can make a selection using speech utterances or DTMF tone inputs.

The voice application 114 invokes various methods of a media group provider application 116. The media group provider comprises at least two aspects. A first aspect, the telephony functions 118, is used to provide supporting functions such as interfacing with the telephony hardware 120 to allow data to be received from and output to the communication device 108. The telephony hardware may include, for example, a SONET telephony interconnection and corresponding digital signal processors, which implement A-law or µ-law companding, DTMF tone detection and the like. A second aspect of the media group provider application 116 presents to the voice application 114 an RTSP application 122 for accessing various, specialised, data processing engines 124 that assist in processing data received from the communication device or to be transmitted to the communication device. The RTSP application 122 presents a generic application interface which comprises a range of commands or media player abstractions for feeding data to and receiving processed data from the data processing engines 124.

The RTSP application 122 uses the RTSP and RTP protocols 126 in conjunction with suitable IP trunking 128 to communicate with a voice processing node 130.

The voice processing node 130 comprises a plurality of audio service modules 134, 136, 137 and 138, which are addressed using RTSP or HTTP requests issued by the RTSP application 122 in response to instructions issued by the application 114. The audio service modules 134 to 138 are arranged to provide audio processing and streaming services. The instructions issued by the application take the form of media player abstractions such as play, pause, record etc.

The audio service modules are responsive to the RTSP or HTTP requests to provide audio processing and streaming services by directing data received from the CAT system 102 to one of the data processing engines 124 as appropriate or by directing data produced by the data processing engines to the caller or the voice application 114.

The data processing engines 124 include a number of Automatic Speech Recognition engines 140, a number of Text-To-Speech engines 142 and audio processors 144 for outputting streamed audio to the CAT system. It will be appreciated that the audio services modules 134 to 138 are accessed using URLs. The voice application or the RTSP application will use a URL of an audio service module 134 to 138 to direct data to an associated data processing engine 140 to 144 or to receive data from a data processing engine 140 to 144.

Each of audio service modules 134 to 138 is configured with the following attributes. A "name" that uniquely identifies a respective module and which is used as the host name in the URL issued by the voice application or the RTSP application. A "capacity" that identifies the number of simultaneous channels or requests that can be serviced by the audio service module. A "service class" that identifies the speech processing capabilities, that is, one of the plurality of data processing engines 124, that needs to be used by the applications and specific data resources such as, for example, announcements, grammars, vocabularies etc that may be needed by the identified data processing engine to allow it to perform its function.

The service classes provided by the data processing engines are described below in greater detail together with an indication of the controls and commands that are associated with those service classes.

One of the audio service modules 138 is arranged to provide file storage capability using an HDD 146 under the heading of a FILE audio services class. The FILE audio services class provides file storage and streaming services for audio files. A request to play a file is identified using a URL of the form: //FileServiceName/FilePath/FileName.ext. The operations supported by this class of service in respect of a valid URL are shown below in TABLE 1.

**TABLE 1**

| **Protocol** | **Operation** | **Description** |
|---|---|---|
| RTSP | SETUP | Initialise the transport mechanism to be used for RTP media |
| | PLAY | Start playing a file to an RTP port |
| | RECORD | Start recording a file from a RTP port |
| | PAUSE | Pause playing or recording |
| | RESUME | Resume playing or recording |
| | TEARDOWN | Stop playing or recording and clear RTSP connection context (including TCP connection) |
| HTTP | OPTIONS | Interrogate Audio Services Module to determine capabilities |
| | GET | Retrieve content of file via http |
| | PUT | Insert audio content at the location indicated by the URI |
| | DELETE | Delete file at URI |

Access to a Text-To-Speech engine 142 is provided using a service class known as TTS audioservices. The TTS audio service class supports the conversion of text files to speech and the streaming of the converted file for output to the application or caller or the posting of the converted file to storage. The TTS service class attributes inherit all of the FILE service class described above, with the exception of recording and with the additional functionality to pass text content in an RTSP SETUP request or an HTTP POST request. Table 2 below illustrates the commands that are associated with this class of service.

**TABLE 2**

| **Protocol** | **Operation** | **Description** |
|---|---|---|
| RTSP | SETUP | Initialise the transport mechanism to be used for RTP media. Optionally carries the text to be spoken as MIME content. |
| | PLAY | Start playing a file to a RTP port |
| | PAUSE | Pause playing |
| | RESUME | Resume playing |
| | TEARDOWN | Stop playing or recording and clear RTSP connection context (including TCP connection) |
| HTTP | OPTIONS | Interrogate Audio Services Module to determine capabilities. |
| | GET | Retrieve content of a file via http |
| | POST | Process the text content and generate an audio file that can be subsequently played. |
| | DELETE | Delete file at URI |

A further class of service in the form of an Automatic Speech Recognition service, ASR AudioService, provides speech recognition facilities to allow utterances of a caller to be deciphered from data on an incoming RTP port to the voice processing node 130. The operations supported using this class of service are shown below in Table 3.

**TABLE 3**

| Protocol | Operation | Description |
|---|---|---|
| RTSP | SETUP | Initialise the transport mechanism to be used for RTP media. The SETUP message may also carry a MIME part that describes a grammar or a vocabulary to be loaded with the recogniser. |
| | RECORD | Start processing spoken data incoming via the RTP port |
| | PAUSE | Pause recognition engine. RTP data is buffered so that no speech is lost until RESUME is invoked |
| | RESUME | Resume recognition |
| | SET_PARAMETER | Dynamically alter recogniser parameters (e.g., switch grammar, etc). The recogniser must be paused for this command to be taken into account. |
| | TEARDOWN | Stop recognition and release recogniser |
| HTTP | OPTIONS | Interrogate audio service module capabilities. |
| | POST | Configure the AudioService recognisers with grammar, vocabularies or other configurable data.(1) |

The ASR AudioService class provides two methods for loading a grammar or a vocabulary for use by a speech recogniser. The first method involves loading the grammar using the command SETUP. The grammar is loaded on the fly into the recogniser that has been assigned for the duration of an ASR session. Once the recogniser has completed its function, the grammar is unloaded and the recogniser is returned to an initial state. A second, alternative method, is to set the grammar via an HTTP POST operation. In such a case, all of the recognisers available are loaded with this grammar and will remain so until a new operation that undoes that load is received or until the use of the class of service has ended.

It will be appreciated that the first method is more flexible, but it is not appropriate for large grammars or vocabularies that will take a significant time to compile and load. For large grammars, it is more efficient to have pre-loaded recognisers. Having the grammars pre-loaded allows the grammar activation and deactivation process to be much faster and this technique should be used to select a desired context within a recognition session.

Embodiments of the present invention provide extensions to the RTSP protocol to support the TTS audioservices class. A message body is added at the end of a SETUP message. This message body encodes the text to be spoken. A require header field, in the form "Require: TTS-AudioServices", is provided to introduce the TTS specification. The header fields shown in Table 4 may be used to describe the message body content or TTS specification.

**TABLE 4**

| Entity header | Requirement | Description |
|---|---|---|
| Content-Encoding | Optional | Encoding to be used to transfer long text files. |
| Content-Language | Optional | Used to specify the language of the text. |
| Content-Length | Required | Length of the body part in bytes |
| Content-Location | Optional | If the content is to be retrieved at another URL |
| Content-Type | Required | Depending on the TTS engine, allowable content may include: • Text/plain • Text/JSML |

Embodiments of the present invention also provide RTSP extensions for supporting the ASR service class. The ASR service class is introduced using a "Require: ASR-AudioServices" header. Table 5 below illustrates the set of headers that may be used in initiating an ASR session. If a specific ASR grammar should be used during the session, the message body is used to specify that grammar.

**TABLE 5**

| Entity header | Requirement | Description |
|---|---|---|
| Enable-Grammar | Optional | A list of names of grammars or vocabularies to enable the recognition session e.g.: enable-grammar: grammar1, grammar2 |
| Disable-Grammar | Optional | A list of grammar names to disable a recognition session. |
| Speaker | Optional | Specify the name of a speaker for whom to load training data eg. speaker: Brian |
| Asr-Result | Required | The Asr-Result directive indicates how the application wants speech recognition results to be returned. **Intermediate-token** Return a token as soon as it has been recognised. **Intermediate-word** Return a word as soon as it has been recognised. **pause-on-intermediate** When the recogniser returns a token or a word, automatically pause and wait for a resume. **max-alternative:** Integer value specifying the maximum number of alternative token to return. **Confidence-level:** A [0.0-1.0] value specifying the minimum confidence that must be reached to accept a token |

When embodiments pass a grammar to an ASR engine, the message body includes the headers shown in Table 6 below to describe that grammar.

**TABLE 6**

| Entity header | Requirement | Description |
|---|---|---|
| Content-Encoding | Optional | Encoding to be used to transfer long text file. |
| Content-Language | Optional | Used to specify the language of the grammar. |
| Content-Length | Required | Length of the body part in bytes |
| Content-Location | Optional | If the content is to be retrieved at another URL |
| Content-Type | Required | Depending on the TTS engine, allowable content may include: • Text/plain • Text/JSGF standard (w3c grammar format) • Application/octet-stream to transfer binary data |

Having performed speech recognition, it will be appreciated that there are a number of ways of returning the results, as can be seen from Table 5 above. Preferred embodiments return intermediate results for each newly decoded word. However, embodiments can be realised in which the ASR engine is set to pause automatically after each new result has been returned or to allow the ASR engine to continue processing until an utterance has been completed and the results finalised. Preferred embodiments return the results to the application in the form of an XML file, which uses appropriate tags to identify the results. An example of such an XML file is shown below.
<result status="accepted">
<phrase>
I come from Australia
</phrase>
</result>

In response to an incoming call from the communication device 108 an instance of the voice application 114 is instantiated. The voice application 114 is arranged to take the caller through a series of voice menus and to provide an automated telephony service. If, for example, the caller is required to utter a reply to an input action in response to a recently output voice menu, the application 114 will instruct the media group provider 116 to enter a record mode of operation in which the data stream, representing uncompressed audio from the communication device 108 or a DTMF tone, received, having been processed by the telephony functionality 118 and telephony hardware 120, from the PSTN network 106 is directed to the voice processing node 130 and ultimately to one of the automatic speech recognition engines 140 where the incoming audio stream, which represents the audio input command of the caller, is processed.

The automatic speech recognition engine 140 will then process the received audio data and forward the results back to the application 114 automatically as embodiments would preferably access an audio service module using a unicast URL.

Furthermore, as part of the execution of the voice application 114, that application 114 may be required to output to the caller a voice menu. As is conventional, the voice menu is synthesised from a corresponding text menu (not shown) supplied to one of the text-to-speech engines 142 or via an audio file streamed by the audio server 144. In this case, the application 114 issues a multicast, conference command to the media group provider 116 which, using an appropriate URL, accesses one of the text-to-speech engines 142. The application will provide to the media group provider 116 the appropriate URL for the text-to-speech engine together with a content description which contains the text to be converted to speech by the TTS engine 142 and an RTC control which directs the text-to-speech engine 142 and audio service module 136 to output the streamed speech that has been generated from the supplied text to an appropriate port of the server 102, so that the generated speech data stream is played ultimately to the user of the communication device 108.

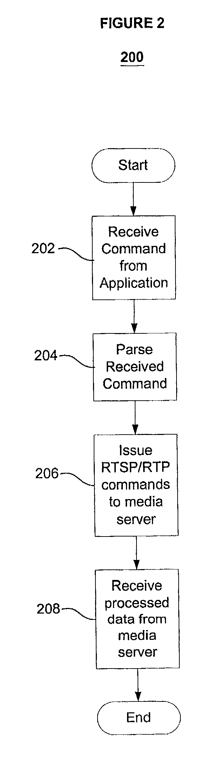

Referring to figure 2 there is shown a flowchart 200 of the actions taken by the media group provider application 116 in response to receiving a media abstraction command from the voice application 114. At step 202 the media group provider 116 receives and stores the command issued by the application 114. The media group provider application 116 parses the received command into its constituent parts. In particular, the type of command is identified, an associated URL is extracted, the content description is identified and the associated controls are also extracted at step 204. At step 206 RTSP commands, as described above with reference to tables 1 to 6, are issued to the voice processing node 130 where effect is given to those RTSP commands via the audio service modules 134 to 138 and the various engines 140 to 144.

The embodiments of the present invention can handle a number of different types of streamed data or media flow. The streamed data that can be supported by or controlled by the media group provider 116 can be classified as follows:
Type 1 streams: Type 1 streams represent real-time media flowing from a remote server, such as the voice processing node 130, to the server 102. This type of stream is arranged to be "played" to an outgoing trunk of the server 102. Streams of this type include, for example, text-to-speech generated flow, voice message data from a MIME decoder and an audio file played from a remote server or a web streaming device etc.
Type 2 streams: Type 2 streams represent real time media flowing in a "record mode" from the server 102 to a media processing resource. The media processing resource may be, for example, one of the data processing engines eg ASR engines 140, a SMTP processor or a remote file server.

It will be appreciated that the RTSP and RTP protocols 126 are used to carry all of the above types of media flow.

Referring again to figure 1, it will be appreciated that preferably the audio service modules 134 to 138 have buffers to allow for the transmission of the real-time data on a 64kbit/sec voice link. It will be appreciated by those skilled in the art that such an arrangement is typically needed since RTP does not provide buffering or slot control and a media source can generally produce streamed data at a much faster rate than that data can be consumed by a PSTN. The IP trunking 128 is used to group the samples from a stream or multiple streams into corresponding IP or RTP packets for subsequent transmission.

Within the server 102, the RTP packets are decoded, assuming that they have been received from the voice processing node 130 and passed to the telephony software 118 and hardware 120 for subsequent output to the communication network as appropriate or to the application.

It can be appreciated from Tables 1 to 6 above that in general the commands have the following format:
*Command (URI*/*URL, content description, RTCs)*
where
*URI*/*URL* is an RTSP universal resource identifier which indicates the address of one of the audio service modules 134 to 138 that provides a corresponding data processing engine, that is, provides access to an appropriate engine;
*Content description* defines the job that is to be performed by the data processing engine identified by the URI/URL. The content description is mapped to the *SETUP* command of RTSP and, in particularly, is mapped to the following commands
*SETUP stsp:*//*example.com*/*...*
*Cseq:302*
*Transport:RTP*/*AVP;unicast;client_port=4588-4589;* and
*RTCs*: this field of the command contains JTAPI media real-time control data. The RTC, in effect, contains commands to be performed when, for example, a signal detected condition, as is known within the art, is detected. For example, the output of a text-to-speech message may be interrupted by the detection of a DTMF input.

It can be appreciated that each of the third party data processing engines 140 to 144 can be interchanged relatively easily and the only changes to the server 102 that need to be made as a consequence of any such data processing resource change are the URIs of those resources and the RTSP content descriptions for those resources.

In the case of an RTP media stream flowing from the server 102 to a media consuming process located on the voice processing node 130, it is consumed using a record command which has a format similar to the general command structure that is, the record command is
*record (URI, grammar, RTCs)*.

The *URI* identifies the engines 140 to 144 to which the incoming or generated stream should be directed; the *grammar* field defining the structure of the data contained within the incoming or generated stream and the RTCs provides the usual control functions.

It will be appreciated that a stream such as described above represents a type 2 stream. The type 2 stream is processed in substantially the same manner as a type 1 stream except there is no need for buffering as streamed data can be consumed by the audio service modules and engines faster than it can be supplied by the network 106.

For example, it is possible to record an incoming voice stream or to process that voice stream to perform speech recognition using one of the ASR modules. In such a case, a *record (URI grammar spec, RTCs)* command would be issued by the application 114 to the media group provider 116 which is ultimately mapped to the RTSP application 122 where the URI is the RTSP universal resource identifier that links to the voice processing node 130 which supports the required ASR engine 140. The *grammar spec* is a description of the grammar to be used during the speech recognition process performed by the ASR engine 140. The grammar spec is passed transparently, within the RTSP SETUP message, to an audio service module which in turn directs it to the appropriately addressed ASR engine 142, as described above. The RTCs is a set of real-time controls that enable the server 102 to detect special conditions such as speech or DTMF tones on the incoming telephony line 104 and to issue appropriate RTSP commands accordingly.

Although the embodiments of the present invention have been described with reference to a computer aided telephony system, it will be appreciated that the invention is equally applicable to integrating any third party media processor or media viewer within an application.

It will be appreciated that a data processing engine, in the context of the present application, includes an application, hardware or a combination of hardware and software, that generates or consumes streamed content. Therefore, an engine may include an application which performs an operation on streamed content and outputs the results of that operation in the form of streamed content.

Although in the embodiment shown the voice processing node 130 is depicted as a separate entity, embodiments can be realised in which the voice processing node forms part of the server 102.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A data processing system comprising a server, operable under the control of a voice application, for handling incoming and outgoing telephony data and a plurality of remote network accessible data processing engines for processing the incoming data and producing the outgoing data; the system comprising
means for streaming the input data, using a streaming communication protocol, to at least one of the plurality of data processing engines using a network identifier corresponding to an interface of the at least one data processing engine.

2. A data processing system as claimed in claim 1, in which the plurality of remote network accessible data processing engines comprise at least one of an automatic speech processing engine for identifying an utterance represented by the incoming telephony data, a text-to-speech processing engine for outputting data representing an utterance derived from text data and an audio streaming engine for outputting a data file containing audio data.

3. A data processing system as claimed in any preceding claim, in which the means for streaming the input data comprises means for issuing at least one of a set of commands of the streaming protocol to instigate the streaming.

4. A data processing system as claimed in claim 3, in which the set of commands includes at least one of play, record, stop, pause, resume, set-up and tear-down.

5. A data processing system as claimed in any preceding claim, further comprising means for outputting data, streamed from the at least one network accessible data processing engines, to a telephony network.

6. A data processing system as claimed in claim 5, in which the output data comprises data representing an utterance.

7. A data processing system as claimed in claim 6, in which the output data comprises a voice menu.

8. A data processing system as claimed in claim 7, in which the network identifier is a URL.

9. A data processing system as claimed in any preceding claim, further comprising means for streaming a grammar to the at least one data processing engine to influence the processing of the streamed input data.

10. A data processing system as claimed in any preceding claim, further comprising means for streaming a vocabulary to the at least one data processing engine to influence the processing results produced by processing the streamed input data.

11. A data processing system as claimed in claim 9 or claim 10, in which the means for streaming a grammar or the means for streaming a vocabulary is activated in response to the receipt of input data.

12. A data processing system as claimed in any of claims 9 to 11, in which the means for streaming a grammar or the means for streaming a vocabulary is activated at initialisation of the at least one data processing engine.

13. A data processing system as claimed in any preceding claim, in which the streaming protocol comprises at least one of RTSP, UDP, RTP.

14. A data processing system as claimed in any preceding claim, further comprising means for providing an extension to the RTSP protocol to support the addition of a message body to at least one RTSP command.

15. A data processing system as claimed in claim 14, in which the message body comprises a header for identifying the data processing engine by which the message should be processed.

16. A computer program element for implementing a system as claimed in any preceding claim.

17. A computer program product comprising a computer readable storage medium having stored thereon a computer program element as claimed in claim

18. A method for use in a data processing system comprising a server, operable under the control of a voice application, for handling incoming and outgoing telephony data and a plurality of remote network accessible data processing engines for processing the incoming data and producing the outgoing data; the method comprising streaming the input data, using a streaming communication protocol, to at least one of the plurality of data processing engines using a network identifier corresponding to an interface of the at least one data processing engine.
